# FASCICULE DE BREVET EUROPEEN

(11) **EP 3 355 428 B1**
(45) Date de publication et mention de la délivrance du brevet: **28.04.2021**
(21) Numéro de dépôt: 18150492.9
(22) Date de dépôt: 05.01.2018
(51) Int. Cl.: H02G 3/12

(54) **BOÎTE ÉLECTRIQUE ENCASTRABLE DANS DES CLOISONS D'ÉPAISSEURS DIFFÉRENTES**
ELEKTRISCHE ANSCHLUSSDOSE, DIE IN TRENNWÄNDE VERSCHIEDENER DICKE EINGEBAUT WERDEN KANN
ELECTRIC BOX FOR INSTALLATION IN PARTITIONS THAT HAVE DIFFERENT THICKNESSES

(30) Priorité: 31.01.2017 FR 1750772
(43) Date de publication de la demande: 01.08.2018
(73) Titulaire: Legrand France, 87000 Limoges (FR); Legrand SNC, 87000 Limoges (FR)
(72) Inventeur: DELMAS, Simon, 87400 La Geneytouse (FR)
(74) Mandataire: Jacobacci Coralis Harle

(56) Documents cités:
- EP-A1- 0 818 864
- EP-A1- 3 159 988
- WO-A1-03/081054
- WO-A1-2007/014981
- DE-A1- 2 328 393
- DE-A1- 2 802 893
- DE-A1- 4 241 989

## Description

### DOMAINE TECHNIQUE AUQUEL SE RAPPORTE L'INVENTION

La présente invention concerne de manière générale l'encastrement d'appareillages électriques dans des cloisons creuses.

Elle concerne plus particulièrement une boîte électrique à encastrer dans une ouverture pratiquée dans un panneau de cloison creuse, comprenant :
- une paroi latérale qui délimite un logement d'accueil d'un mécanisme d'appareillage et qui est ouverte à l'avant,
- un épaulement qui est adapté à s'appuyer contre la face avant dudit panneau et qui est porté par une partie avant de la paroi latérale,
- un moyen d'accrochage à l'arrière dudit panneau, qui est porté par une partie arrière de la paroi latérale, et
- une partie annulaire qui est située entre les parties avant et arrière de la paroi latérale.

### ARRIERE-PLAN TECHNOLOGIQUE

On rappelle que, de manière générale, une cloison creuse comporte une ossature en métal ou en bois, sur laquelle sont rapportés des panneaux de plâtre.

Une boîte électrique à engager au travers d'une ouverture pratiquée dans un tel panneau de plâtre comprend généralement une paroi latérale cylindrique, fermée à l'arrière par un fond et portant à l'avant un épaulement périphérique, lequel est adapté à s'appuyer contre la face avant du panneau de plâtre pour éviter que la boîte ne s'enfonce trop dans la paroi.

La boîte électrique comporte également des moyens d'accrochage à l'arrière du panneau de plâtre qui, combinés avec l'épaulement périphérique, sont conçus pour venir pincer le bord de l'ouverture pratiquée dans le panneau de plâtre.

Ces moyens de fixation peuvent par exemple se présenter sous la forme de griffes qui interviennent en position diamétralement opposée et qui, sous le contrôle de vis, sont aptes à venir s'accrocher à l'arrière du panneau de plâtre.

L'avantage de cette solution technique est qu'elle permet de fixer la boîte électrique dans des panneaux de plâtre d'épaisseurs variables.

L'inconvénient est que son installation s'avère fastidieuse, notamment lorsqu'il s'agit de manœuvrer les vis pour faire remonter les griffes le long de la paroi latérale de la boîte électrique jusqu'à ce qu'elles s'accrochent au panneau de plâtre, tout en maintenant la boîte électrique dans l'orientation souhaitée.

On connaît aussi des boîtes électriques dont les moyens d'accrochage sont formés par des volets d'encliquetage adaptées à s'accrocher à l'arrière des panneaux de plâtre. Ces boîtes électriques sont plus faciles à installer dans les panneaux de plâtre, puisqu'il suffit de les y engager pour que leurs volets se clipsent automatiquement à l'arrière du panneau de plâtre. Malheureusement, de telles boîtes électriques ne peuvent s'utiliser que sur des panneaux de plâtre dont les épaisseurs sont égales à la distance séparant les volets de l'épaulement périphérique de la boîte.

On connaît du document DE2802893 une boîte électrique à encastrer dans une cavité pratiquée dans une paroi maçonnée. Cette boîte se fixe par son fond à la paroi et présente une hauteur ajustable pour s'adapter à la profondeur de la cavité pratiquée dans la paroi.

On connaît par ailleurs du document WO2007014981 une boîte électrique en deux parties appelées "boîtier" et "collier". Le collier présente une forme de tube ouvert à ses deux extrémités. Il est conçu pour être engagé en premier dans la paroi, par encliquetage. Le boîtier est quant à lui conçu pour être engagé dans le collier et pour s'y fixer par encliquetage.

### OBJET DE L'INVENTION

Ici, la présente invention propose une nouvelle boîte électrique susceptible de pouvoir se clipser dans des plaques de plâtre d'épaisseurs variables.

Plus particulièrement, on propose selon l'invention une boîte électrique telle que définie dans la revendication 1.

De cette manière, en étirant la partie annulaire, il est possible d'ajuster la distance séparant l'épaulement des volets, de manière que ces derniers puissent s'encliqueter à l'arrière de la paroi, quelle que soit l'épaisseur de celle-ci.

L'intérêt d'utiliser une partie annulaire dans une matière rigide identique à celle de l'épaulement est de réduire les coûts de fabrication de la boîte électrique tout en assurant à la boîte électrique une bonne solidité par rapport à une boîte dont la partie annulaire serait réalisée dans une matière souple.

Un autre intérêt de la partie annulaire est que le maintien préliminaire de la boîte électrique en position dans la paroi est optimisé. En effet, il est d'usage dans un premier temps de placer la boîte électrique dans la paroi puis, dans un second temps, de rapporter l'appareillage électrique dans la boîte et de l'y fixer solidement. Ici, parce que la partie annulaire a naturellement tendance à revenir vers son état non déformé, les volets et l'épaulement prennent fermement en sandwich le bord de l'ouverture de la paroi, de qui permet d'assurer le maintien en position de la boîte tant que le mécanisme n'y est pas rapporté.

On notera par ailleurs ici que lorsque la partie annulaire est fermée (c'est-à-dire qu'elle est dépourvue d'ouverture laissée ouverte), la boîte électrique présente une étanchéité à l'air conforme aux normes BBC (« bâtiment basse consommation »).

D'autres caractéristiques avantageuses et non limitatives de la boîte électrique conforme à l'invention sont les suivantes :
- la partie annulaire présente une forme de soufflet étirable axialement ;
- la partie annulaire est étirable axialement avec une amplitude supérieure à 3 millimètres ;
- la partie annulaire, la partie avant de la paroi latérale, une portion au moins de la partie arrière de la paroi latérale et le moyen d'accrochage sont réalisés dans une même matière ;
- chaque volet est situé dans une ouverture pratiquée dans la partie arrière de la paroi latérale et est reliée au bord de l'ouverture, sur au moins une partie de sa périphérie, par un joint réalisé dans une matière plus souple que celle de la partie annulaire ;
- le joint interrompt la partie annulaire et présente un renflement situé dans cette interruption ;
- chaque volet comporte, d'une part, une lamelle qui est rattachée à la partie arrière de la paroi latérale par un bord d'extrémité, et, d'autre part, un rebord d'accrochage dont la distance audit bord d'extrémité est sensiblement invariable (lorsque le volet pivote) ;
- chaque volet étant rappelé élastiquement en position déployée, chaque volet porte une partie de manœuvre accessible à un usager depuis ledit logement d'accueil pour placer le volet en position escamotée ;
- le volet porte un puits de vissage qui est adapté à accueillir la tige filetée d'une vis de fixation du mécanisme d'appareillage, laquelle forme alors ladite partie de manœuvre ;
- chaque volet est équipé d'un moyen d'assujettissement d'une calle adaptée à venir s'appuyer contre la face arrière du panneau de cloison creuse ; et
- chaque volet comporte au moins une rampe permettant de forcer ledit volet à se déplacer vers sa position escamotée à la faveur de l'engagement de la boîte électrique dans ladite ouverture.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'une boîte électrique conforme à l'invention ;
- les figures 2 et 3 sont des vues schématiques en coupe de la boîte électrique de la figure 1, montée sur deux panneaux d'épaisseurs différentes ; et
- la figure 4 est une vue schématique en perspective de la boîte électrique de la figure 1 et d'une partie du mécanisme d'appareillage qu'elle accueille.

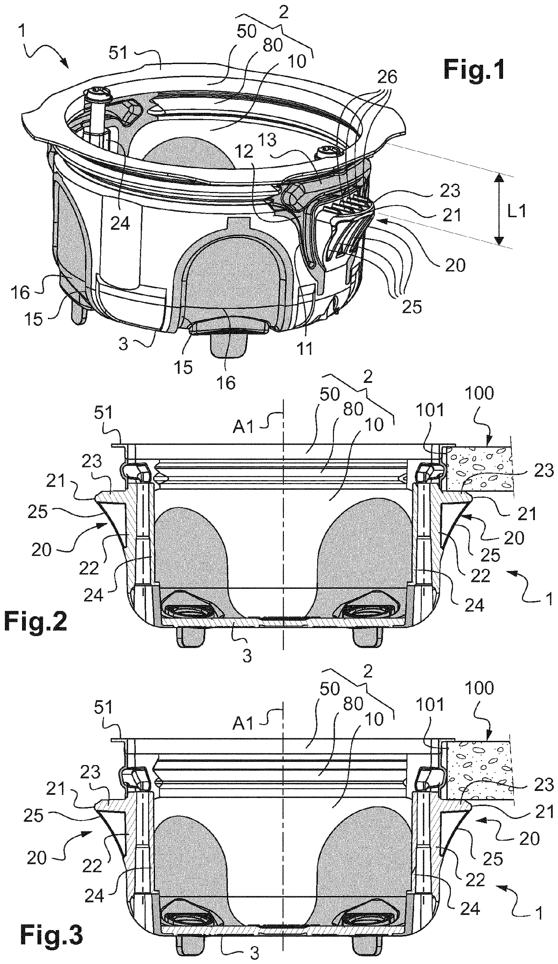

Sur les figures 1 à 4, on a représenté un mode de réalisation particulier d'une boîte électrique 1 à rapporter sur une paroi.

En préliminaire, on notera que sur la figure 1, les parties représentées en blanc sont des parties de la boîte électrique 1 réalisées dans un matériau rigide, tel que le polypropylène ou le PVC, et les parties grisées sont des parties réalisées dans un matériau sensiblement plus souple, tel que le SEBS (« polystyrène-b-poly(éthylène-butylène)-b-polystyrène »). Par « plus souple », on entend que le module d'Young des parties grisées est au moins cinq fois inférieur à celui des parties en blanc. En pratique, contrairement aux parties en blanc, les parties grisées pourront être réalisées en matériau viscoélastique.

Ici, la boîte électrique 1 est du type à encastrer dans une cavité pratiquée dans une cloison creuse.

On rappelle à ce sujet que, de manière connue, une telle cloison creuse est généralement composée d'une ossature métallique (formée de montants verticaux et de rails horizontaux non représentés) et de panneaux de plâtre rapportés sur l'une au moins des deux faces de l'ossature métallique.

En variante, il pourrait s'agir d'une cloison creuse maçonnée.

Ici, la cavité pratiquée dans la cloison creuse pour accueillir la boîte électrique 1 est simplement formée par une ouverture 101 réalisée à la scie cloche dans l'un des panneaux de plâtre 100 (voir par exemple la figure 5).

Dans la description, les termes « avant » et « arrière » seront utilisés par rapport à la direction du regard de l'installateur de la boîte électrique 1 dans le panneau de plâtre 100. Ainsi, les termes avant et arrière désigneront respectivement le lieu tourné vers l'extérieur de la cloison creuse et le lieu tourné à l'opposé.

Ici, comme le montre la figure 1, la boîte électrique 1 présente une forme générale cylindrique de révolution autour d'un axe central A1, de manière à pouvoir recevoir un appareillage électrique 200 (voir figure 5). En variante, elle pourrait présenter une forme différente, notamment parallélépipédique ou oblongue (de manière à délimiter plusieurs postes d'accueil d'appareillages électriques).

Comme cela apparaît sur la figure 1, cette boîte électrique 1 comporte une paroi latérale 2 tubulaire qui est centrée sur l'axe central A1. Cette paroi latérale 2 est fermée à l'arrière par une paroi de fond 3 et est ouverte vers l'avant.

On distingue, de l'arrière vers l'avant, trois tronçons différents sur cette paroi latérale 2, appelés partie arrière 10, partie annulaire 80 et partie avant 50.

La partie arrière 10 de la paroi latérale 2 est jointive avec la paroi de fond 3.

La partie avant 50 de la paroi latérale 2 porte un épaulement 51 en saillie vers l'extérieur.

Cet épaulement 51 forme ici un trottoir périphérique, puisqu'il longe extérieurement l'ensemble du bord avant de la paroi latérale 2. Il est ainsi conçu pour prendre appui contre la face avant du panneau de plâtre 100, tout autour de l'ouverture 101. En variante, il pourrait présenter une forme différente. Ainsi pourrait-il éventuellement être interrompu par des encoches.

Quelle que soit sa forme, cet épaulement 51 permet de bloquer la boîte électrique 1 par rapport au panneau de plâtre 100 vers l'arrière, de façon à éviter qu'elle ne s'enfonce trop dans celle-ci.

Pour bloquer la boîte électrique 1 vers l'avant, de manière à ce qu'elle puisse ressortir inopportunément du panneau de plâtre 100, la partie arrière 10 de la paroi latérale 2 comporte des moyens d'accrochage 20. Ces moyens d'accrochage 20 se présentent ici sous la forme de deux volets 21 adaptées à s'encliqueter à la face arrière du panneau de plâtre 100.

Ces deux volets 21 sont situés de manière diamétralement opposée par rapport à l'axe central A1. Ils sont chacun mobiles entre une position déployée (figure 1) dans laquelle ils s'étendent au moins en partie en saillie à l'extérieur de ladite paroi latérale 2, et une position rétractée (ou « escamotée ») vers l'axe central A1 par rapport à la position déployée.

Ces volets 21 seront décrits plus en détail dans la suite de cet exposé.

La boîte électrique 1 comporte par ailleurs des moyens d'assujettissement d'un appareillage électrique. Comme le montre la figure 1, il s'agit ici de puits de vissage 24 permettant d'y visser des vis de fixation d'un support d'appareillage électrique. En variante, il pourrait s'agir de puits de vissage pour vis auto-taraudeuses.

Ici, cette boîte électrique 1 est conçue pour pouvoir être montée sur des panneaux de plâtre 100 d'épaisseurs différentes.

Pour cela, selon une caractéristique particulièrement avantageuse de l'invention, la partie annulaire 80 (qui joint les parties avant 50 et arrière 10 de la paroi latérale 2) est réalisée dans la même matière rigide que l'épaulement 51 et elle est conformée de façon à être déformable axialement, selon l'axe central A1.

Cette partie annulaire 80 présente ici une forme de soufflet sensiblement de révolution autour de l'axe central A1.

L'épaisseur de la paroi constituant ce soufflet peut être ajustée de façon à soit réduire l'effort nécessaire pour étirer le soufflet, soit accroître la force de pincement de la plaque de plâtre 100 entre l'épaulement 51 et les volets 21.

En variante, la partie annulaire 80 pourrait présenter une forme différente, pour autant qu'elle soit extensible selon l'axe central A1. Elle pourrait ainsi présenter une section, non pas en forme de W, mais en forme de S ou de Ω ou de O.

Ici, la partie annulaire 80 est donc déformable selon l'axe central A1.

De manière préférentielle, elle est déformable tant en traction (pour être étirée), qu'en compression (pour être écrasée).

Elle est ainsi étirable depuis sa position de repos (non contrainte) jusqu'à une position extrême d'étirement, avec une amplitude supérieure ou égale à 1,5 millimètres.

La partie annulaire 80 est en outre comprimable depuis sa position de repos jusqu'à une position extrême d'écrasement, avec une amplitude supérieure ou égale à 1,5 millimètres.

L'objectif est que l'amplitude de déformation de la partie annulaire 80 entre ses positions extrêmes soit supérieure ou égale à 3 millimètres.

Ici, l'amplitude de déformation en traction de la partie annulaire 80 est supérieure ou égale à 3 millimètres.

En outre, en position de repos, lorsque la partie annulaire 80 n'est pas contrainte, l'épaulement 51 et les volets 21 de la boîte électrique sont distants d'une distance L1 très légèrement inférieure à 10 millimètres (par exemple comprise entre 9 et 10 millimètres), ce qui permet de rapporter la boîte électrique 1 sur des panneaux de plâtre de 10 d'épaisseur (voir figure 2) à 13 millimètres d'épaisseur (voir figure 3).

En outre, la boîte électrique 1 pourra, grâce au caractère compressible de la partie annulaire 80, être montée sur des panneaux de plâtre d'épaisseurs inférieures au 10 millimètres. En effet, le vissage d'un mécanisme d'appareillage dans les puits de vissage 24 permettra de comprimer la partie annulaire 80, si bien que cette dernière ne s'opposera pas à la fixation de la boîte dans la cloison.

Bien entendu, cette amplitude de déformation et cette position de repos pourraient être choisies différemment. Ainsi, l'amplitude de déformation en traction de la partie annulaire 80 pourrait être choisie supérieure ou égale à 6 millimètres, et au repos, l'épaulement 51 et les volets 21 pourraient êtres distants d'une distance L1 très légèrement inférieure à 20 millimètres. De cette façon, la boîte électrique 1 pourrait être rapportée sur des panneaux de plâtre de 20 à 26 millimètres d'épaisseur. Dans cette variante, on pourrait prévoir que les volets puissent recevoir des « calles » de manière à ce que la boîte puisse également être montée sur des panneaux d'épaisseurs inférieures. Cet aspect de l'invention sera décrit plus en détail à la fin de cet exposé.

On comprend ainsi qu'il devient possible de monter la boîte électrique 1 sur une grande variété de parois, avec une grande facilité puisque ce montage se résume à encliqueter la boîte électrique sur la paroi.

On peut maintenant décrire plus en détail les deux volets 21.

Ces deux volets 21 sont identiques.

Comme le montre la figure 1, chaque volets 21 est situé dans une ouverture 11 pratiquée dans la partie arrière 10 de la paroi latérale 2.

Comme le montrent les figures 2 et 3, chaque volet 21 comporte deux parties principales qui s'étendent perpendiculairement l'une par rapport à l'autre, à savoir une lamelle 22 et un rebord d'accrochage 23.

Au repos, la lamelle 22 s'étend dans le prolongement de la partie arrière 10 de la paroi latérale 2 et elle porte sur sa face externe, du côté de son extrémité avant, le rebord d'accrochage 23.

Chaque lamelle 22 présente une forme allongée parallèlement à l'axe central A1, avec trois bords libres et un bord arrière qui se raccorde à la partie arrière 10 de la paroi latérale 2. Ce bord arrière est déformable en flexion de façon à former une sorte de charnière.

Les trois bords libres sont quant à eux reliés au bord de l'ouverture 11 par un joint 12 en matière souple, qui permet de garantir l'étanchéité de la boîte électrique autour de chaque volet 21. Ce joint 12 est ici étirable et déformable élastiquement, pour ne pas former obstacle au basculement du volet 21 entre ses positions déployée et rétractée.

Comme le montre bien la figure 1, ce joint 12 interrompt la partie annulaire 80, qui est donc en pratique formée de deux parties distinctes en arc-de-cercle.

Chaque joint 12 présente un renflement 13 situé au niveau de l'interruption de la partie annulaire 80. Cette forme du joint 12 permet de créer une sorte de « réserve de longueur de joint », afin que lorsque le volet 21 pivote, la seule déformation du joint (et non plus son extension) suffise à laisser le volet libre de basculer.

Ce renflement 13 s'étend en longueur sur plus que la largeur du volet 21, si bien qu'il déborde de part et d'autre de ce dernier.

Le rebord d'accrochage 23 s'étend sensiblement à angle droit par rapport à la lamelle 22 (à 5 degrés près), à l'avant de celle-ci. Il présente ainsi une face avant parallèle à la face arrière de l'épaulement 51, ce qui lui permet de s'appliquer contre la face arrière du panneau de plâtre 100 lorsque l'épaulement s'applique contre la face avant de celui-ci.

On remarque ici sur la figure 1 que la face avant de ce rebord d'accrochage 23 porte des nervures 26 adaptées à s'ancrer dans la face arrière du panneau de plâtre lors du montage de l'appareillage électrique 200 dans la boîte électrique 1.

Au repos, alors que le volet 21 est en position déployée, le rebord d'accrochage 23 fait saillie à l'extérieur de la partie arrière 10 de la paroi latérale 2. En position rétractée, il est entièrement situé à l'intérieur de cette partie arrière 10, de manière à ne pas gêner l'engagement de cette partie arrière 10 au travers de l'ouverture 101 pratiquée dans le panneau de plâtre 100.

Comme le montrent les figures 1 à 3, le volet 21 porte, entre la face arrière de son rebord d'accrochage 23 et la face extérieure de sa lamelle 22, des nervures sensiblement triangulaires qui permettent non seulement de rigidifier l'ensemble, mais qui forment en outre des rampes 25 permettant de forcer le volet 21 à se déplacer vers sa position rétractée à la faveur de l'enfoncement de la boîte électrique 1 dans l'ouverture 101.

Ici, chaque volet 21 est rappelée élastiquement en position déployée par le joint 12 et par sa charnière qui la relie au reste de la partie arrière 10 de la paroi latérale 2. Ainsi, une fois la boîte électrique 1 installée dans le panneau de plâtre 100, les volets 21 restent situés à l'arrière de ce panneau, si bien qu'un effort de traction exercée sur la boîte électrique 1 ne permet pas de la ressortir de l'ouverture 101.

Pour permettre l'extraction de la boîte électrique 1 hors de l'ouverture 101, chaque volet 21 porte une partie de manœuvre qui est accessible à un usager, de manière à permettre à ce dernier de forcer le volet 21 à basculer en position rétractée.

On pourrait ainsi prévoir que la face intérieure de la lamelle de chaque volet porte un ergot dans lequel serait prévue une fente, de manière que l'usager puisse y engager la pointe d'un outil de manière à forcer le volet à basculer.

Ici, cette fonction est assurée par les puits de vissage 24, dont on rappelle qu'ils sont conçus pour recevoir la tige filetée d'une vis de fixation 40 d'un appareillage électrique 200.

Pour cela, comme le montre la figure 2, chaque puits de vissage 24 est fixé exclusivement à la face interne de la lamelle 22 du volet 21 correspondant, de manière à ne pas gêner le basculement de celui-ci.

On comprend alors que lorsque le puits de vissage 24 accueille une vis de fixation 40, l'usager peut utiliser cette dernière à la manière d'un levier pour forcer le volet 21 à basculer en position rétractée.

Ici, les volets 21, la partie annulaire 80, la partie avant 50 de la paroi latérale 2 (avec son épaulement 51), et une portion de la partie arrière 10 de la paroi latérale 2 sont réalisés dans une même matière rigide.

La matière souple n'est alors utilisée pour fabriquer que les joints 12 et des opercules 16 décrits ci-après.

On observe sur la figure 1 que pour permettre de tirer à l'intérieur de la boîte électrique 1 des conducteurs électriques d'amenée de courant, la partie arrière 10 de la paroi latérale 2 présente au moins une ouverture de passage 15.

Ici, il est prévu quatre ouvertures de passage 15 qui s'étendent chacune à cheval sur la paroi latérale 2 et sur la paroi de fond 3 de la boîte électrique 1.

Ces ouvertures de passage 15 sont fermées par des opercules 16 en matière souple, qui sont transperçables ou manuellement retirables pour permettre le passage et le maintien de l'extrémité d'une gaine de cheminement à l'intérieur de laquelle courent des fils électriques.

Ici, la boîte électrique 1 est fabriquée en deux opérations successives, dont une opération de moulage des parties rigides (en blanc sur la figure 1), suivie d'une opération de surmoulage des parties souples (grisées sur la figure 1).

Les étapes de mise en place de la boîte électrique 1 au travers de l'ouverture 101 pratiquée dans le panneau de plâtre 100 sont les suivantes.

Initialement, comme le montre la figure 1, les volets 21 sont en position déployée et la partie annulaire 80 n'est pas étirée.

Puis, lorsque l'installateur force la boîte électrique 1 à s'engager au travers de l'ouverture 101, les rampes 25 des volets 21 viennent en appui contre le bord de l'ouverture 101, ce qui contraint les volets 21 à basculer en position rétractée.

Ici, on pourra noter que si l'effort à exercer axialement sur la boîte électrique 1 pour la faire entrer dans l'ouverture 101 est trop important, l'installateur peut faire levier avec les vis de fixation 40 pour forcer les volets 21 à basculer en position rétractée de manière à ce qu'ils ne gênent par l'insertion de la boîte électrique 1 dans l'ouverture 101.

Généralement, lorsque l'épaulement 51 arrive en appui contre la face avant du panneau de plâtre 100, les volets 21 sont encore situés dans l'ouverture 101, si bien qu'ils ne peuvent pas se déployer à l'arrière du panneau de plâtre 100.

L'installateur peut alors forcer la partie annulaire 80 à s'étirer axialement, soit en poussant sur la paroi du fond 3 de la boîte, soit en poussant sur les vis de fixation 40 vers l'arrière.

Dès que les volets 21 dépassent le bord arrière de l'ouverture 101, ils se déploient alors naturellement à l'arrière du panneau de plâtre 100.

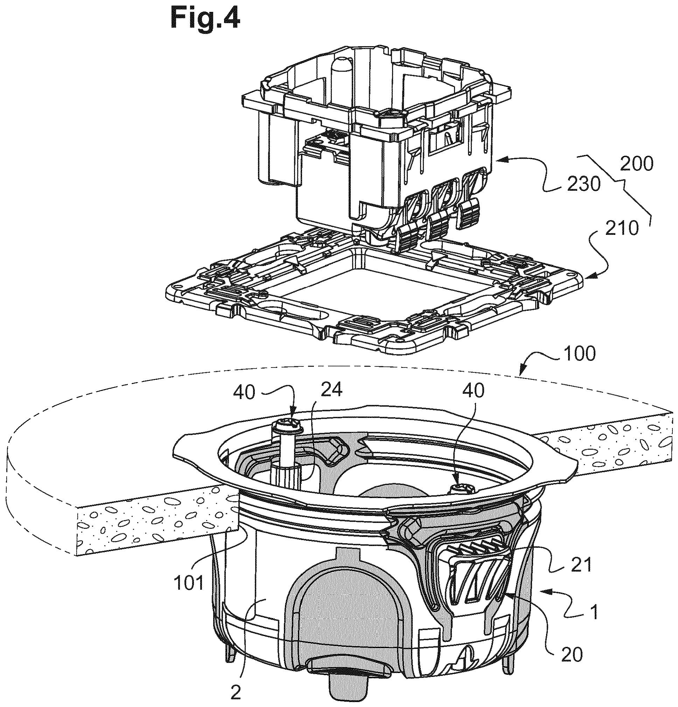

Une fois la boîte électrique 1 en place, l'installateur peut y rapporter l'appareillage électrique 200 (voir figure 4). Le support 210 et le socle 230 de cet appareillage électrique 200 sont ici représentés en vue éclatée. Ils présentent des formes classiques et ne seront donc pas décrits en détail.

On observera seulement sur cette figure que le support 210, qui sert au montage du socle 230 à l'intérieur de la boîte électrique 1, se présente sous la forme d'un cadre plat carré dont le bord intérieur est conçu pour recevoir, par encliquetage, le socle 230 et dont les quatre branches présentent un orifice en forme de trou de serrure propre à permettre sa fixation à la boîte électrique 1, au moyen des vis de fixation 40.

En variante, le support et le socle pourraient être formés en une seule pièce monobloc.

Pour fixer l'appareillage électrique 200 à la boîte électrique 1, il suffira alors à l'installateur de rapporter l'appareillage électrique 200 sur la boîte électrique 1 en veillant à ce que les orifices en formes de trous de serrure du support 210 s'engagent sur les vis de fixation 40 (lesquelles sont à ce stade partiellement vissées dans les puits de vissage 24 de la boîte). Puis, en vissant ces vis, l'installateur s'assurera, d'une part, de la fixation de l'appareillage électrique 200 à la boîte électrique 1, et, d'autre part, du blocage de la boîte électrique 1 sur le panneau de plâtre 100. En effet, le vissage des vis aura tendance à faire remonter la partie arrière 10 de la paroi latérale 2 de la boîte électrique 1 vers l'avant, en comprimant la partie annuaire 80, ce qui permettra aux nervures 26 des volets 21 de s'incruster dans la face arrière du panneau de plâtre 100.

Lorsque l'usager souhaite retirer la boîte électrique 1 du panneau de plâtre 100, il doit retirer l'appareillage électrique 200 en dévissant partiellement les vis de fixation 40, puis il peut ensuite pincer les vis de fixation 40 l'une vers l'autre, de manière à faire basculer les volets 21 en position rétractée. Alors, dès que les volets 21 auront basculé, la partie annulaire 80 reprendra une forme identique ou proche de sa forme initiale en se rétractant, de telle sorte que les volets 21 se retrouveront situés à l'intérieur du bord de l'ouverture 101 et qu'ils seront retenus en position rétractée par ce bord. L'usager pourra alors facilement extraire la boîte électrique 1 hors de l'ouverture 101.

La présente invention n'est nullement limitée au mode de réalisation décrit et représenté, mais l'homme du métier saura y apporter toute variante possible.

Ainsi, on aurait pu prévoir que les puits de vissage soient portés, non pas par les volets, mais par la paroi latérale de la boîte électrique.

On aurait pu également prévoir que les moyens d'assujettissement de l'appareillage électrique ne se présentent pas sous la forme de puits de vissage, mais plutôt sous la forme de fenêtres prévues en creux dans la face interne de la paroi latérale de la boîte électrique. Ces fenêtres permettraient alors de fixer le support d'appareillage dans la boîte électrique, par encliquetage.

Selon une autre variante de l'invention non représentée sur les figures, on aurait pu prévoir que le rebord d'accrochage de chaque volet présente un moyen d'assujettissement d'une calle. A titre d'exemple, la face avant de ce rebord d'accrochage pourrait présenter, en creux, une rainure en queue d'aronde, permettant d'y fixer la calle. Cette calle formant une surépaisseur, elle pourra alors permettre de fixer la boîte électrique sur des panneaux de plâtre de faibles épaisseurs. Elle pourra également permettre de forcer la partie annulaire à davantage s'étendre axialement, de manière à accroître le volume intérieur de la boîte électrique 1 (ce qui permettra d'y rapporter des appareillages électriques plus volumineux).

Selon une autre variante de l'invention, on aurait pu prévoir que la partie annulaire soit partiellement ouverte. En effet, la partie annulaire étant située dans l'épaisseur de la paroi en plâtre, les ouvertures prévues dans la partie annulaire ne déboucheraient pas vers l'extérieur si bien qu'elles n'affecteraient pas le caractère étanche de la boîte.

## Revendications

1. Boîte électrique (1) à encastrer dans une ouverture (101) pratiquée dans un panneau (100) de cloison creuse, comprenant :
- une paroi latérale (2) qui délimite un logement d'accueil d'un mécanisme d'appareillage (200) et qui est ouverte à l'avant,
- un épaulement (51) qui est adapté à s'appuyer contre la face avant dudit panneau (100) et qui est porté par une partie avant (50) de la paroi latérale (2)
- une partie annulaire (80) qui est située entre la partie avant (50) et une partie arrière (10) de la paroi latérale (2), qui est réalisée dans la même matière que ledit épaulement (51) et qui est déformable axialement, **caractérisée en ce que**
- un moyen d'accrochage (20) à l'arrière dudit panneau (100) est porté par la partie arrière (10) de la paroi latérale (2), et qui comporte au moins un volet (21) adapté à pivoter entre une position escamotée dans laquelle il ne forme pas obstacle à l'engagement de la boîte électrique (1) dans ladite ouverture (101) et une position déployée dans laquelle il s'accroche à l'arrière dudit panneau (100),
chaque volet (21) étant situé dans une ouverture (11) pratiquée dans la partie arrière (10) de la paroi latérale (2) et étant reliée au bord de l'ouverture (11), sur au moins une partie de sa périphérie, par un joint (12) réalisé dans une matière plus souple que celle de la partie annulaire (80), le joint (12) interrompant la partie annulaire (80) et présentant un renflement (13) situé dans cette interruption.

2. Boîte électrique (1) selon la revendication précédente, dans laquelle la partie annulaire (80) présente une forme de soufflet étirable axialement.

3. Boîte électrique (1) selon l'une des revendications précédentes, dans laquelle la partie annulaire (80) est étirable axialement avec une amplitude supérieure à 3 millimètres.

4. Boîte électrique (1) selon l'une des revendications précédentes, dans laquelle la partie annulaire (80), la partie avant (50) de la paroi latérale (2), une portion au moins de la partie arrière (10) de la paroi latérale (2) et le moyen d'accrochage (20) sont réalisés dans une même matière.

5. Boîte électrique (1) selon l'une des revendications précédentes, dans laquelle chaque volet (21) comporte, d'une part, une lamelle (22) qui est rattachée à la partie arrière (10) de la paroi latérale (2) par un bord d'extrémité, et, d'autre part, un rebord d'accrochage (23) dont la distance audit bord d'extrémité est sensiblement invariable.

6. Boîte électrique (1) selon l'une des revendications précédentes, dans laquelle chaque volet (21) étant rappelé élastiquement en position déployée, chaque volet (21) porte une partie de manœuvre qui est accessible à un usager depuis l'intérieur dudit logement d'accueil et qui permet de placer le volet (21) en position escamotée.

7. Boîte électrique (1) selon la revendication précédente, dans laquelle le volet (21) porte un puits de vissage (24) qui est adapté à accueillir la tige filetée d'une vis de fixation (40) du mécanisme d'appareillage (200), laquelle vis de fixation (40) forme ladite partie de manœuvre.

8. Boîte électrique selon l'une des revendications précédentes, dans laquelle chaque volet est équipé d'un moyen d'assujettissement d'une calle adaptée à venir s'appuyer contre la face arrière du panneau de cloison creuse.

9. Boîte électrique (1) selon l'une des revendications précédentes, dans laquelle chaque volet (21) comporte au moins une rampe (25) permettant de forcer ledit volet (21) à se déplacer vers sa position escamotée à la faveur de l'engagement de la boîte électrique (1) dans ladite ouverture (101).

## Patentansprüche

1. Elektrische Anschlußdose (1), die in eine in einer Hohlwandtafel (100) gebildete Öffnung (101) einzusetzen ist, mit
- einer Seitenwand (2), die einen Aufnahmeraum für einen Gerätemechanismus (200) begrenzt und die vorne offen ist,
- einer Schulter (51), die dazu ausgelegt ist, an der Vorderseite der Tafel (100) anzuliegen, und die von einem vorderen Teil (50) der Seitenwand (2) getragen ist,
- einem ringförmigen Teil (80), der zwischen dem vorderen Teil (50) und einem hinteren Teil (10) der Seitenwand (2) gelegen ist, der aus demselben Material wie die Schulter (51) gefertigt ist und der axial verformbar ist,
**dadurch gekennzeichnet, daß**
- ein Mittel (20) zum Einhaken an der Rückseite der Tafel (100) vom hinteren Teil (10) der Seitenwand (2) getragen wird und wenigstens eine Klappe (21) aufweist, die dazu ausgelegt ist, zwischen einer eingefahrenen Stellung, in der sie dem Einsetzen der elektrischen Schaltdose (1) in die Öffnung (101) keinen Widerstand entgegensetzt, und einer ausgefahrenen Stellung, in der sie sich an der Rückseite der Tafel (100) festhält, zu schwenken,
wobei jede Klappe (21) in einer Öffnung (11) angeordnet ist, die im hinteren Teil (10) der Seitenwand (2) gebildet ist und wenigstens an einem Teil ihres Umfangs durch eine Dichtung (12) aus einem Material, das flexibler als jenes des ringförmigen Teils (80) ist, mit dem Rand der Öffnung (11) verbundenen ist, wobei die Dichtung (12) den ringförmigen Teil (80) unterbricht und eine in dieser Unterbrechung liegende Verdickung (13) aufweist.

2. Elektrische Anschlußdose (1) gemäß dem vorangehenden Anspruch, **dadurch gekennzeichnet, daß** der ringförmige Teil (80) die Form eines axial ausziehbaren Balgs aufweist.

3. Elektrische Anschlußdose (1) gemäß einem der vorangehenden Ansprüche, **dadurch gekennzeichnet, daß** der ringförmige Teil (80) mit einer Amplitude von mehr als 3 mm axial ausziehbar ist.

4. Elektrische Anschlußdose (1) gemäß einem der vorangehenden Ansprüche, **dadurch gekennzeichnet, daß** der ringförmige Teil (80), der vordere Teil (50) der Seitenwand (2), wenigstens ein Teil des hinteren Teils (10) der Seitenwand (2) und die Einhakmittel (20) aus demselben Material gefertigt sind.

5. Elektrische Anschlußdose (1) gemäß einem der vorangehenden Ansprüche, **dadurch gekennzeichnet, daß** jede Klappe (21) einerseits eine Lamelle (22), die mit einem Endrand am hinteren Teil (10) der Seitenwand (2) angebracht ist, und andererseits einen Einhakrand (23), dessen Abstand vom Endrand im Wesentlichen unveränderbar ist, aufweist.

6. Elektrische Anschlußdose (1) gemäß einem der vorangehenden Ansprüche, **dadurch gekennzeichnet, daß** jede Klappe (21) einen Betätigungsteil aufweist, der für einen Benutzer vom Inneren des Aufnahmeraums her zugänglich ist und der ermöglicht, die Klappe (21) in die eingefahrene Stellung zu bringen, wobei jede Klappe (21) elastisch in die ausgefahrene Position zurückgebracht wird.

7. Elektrische Anschlußdose (1) gemäß dem vorangehenden Anspruch, **dadurch gekennzeichnet, daß** die Klappe (21) eine Schraubvertiefung (24) aufweist, die dazu ausgelegt ist, den Gewindestift einer Befestigungsschraube (40) des Gerätemechanismus (200) aufzunehmen, wobei die Befestigungsschraube (40) den Betätigungsteil bildet.

8. Elektrische Anschlußdose gemäß einem der vorangehenden Ansprüche, **dadurch gekennzeichnet, daß** jede Klappe mit einem Befestigungsmittel eines Keils versehen ist, der dazu ausgelegt ist, sich an die Rückseite der Hohlwandtafel anzulegen.

9. Elektrische Anschlußdose (1) gemäß einem der vorangehenden Ansprüche, **dadurch gekennzeichnet, daß** jede Klappe (21) wenigstens eine Schräge (25) aufweist, die ermöglicht, die Klappe (21) dazu zu zwingen, sich zum Einsetzen der elektrischen Anschlußdose (1) in die Öffnung (101) in die eingefahrene Stellung zu bewegen.

## Claims

1. An electrical box (1) for flush mounting in an opening (101) formed in a hollow partition panel (100), said electrical box comprising:
• a side wall (2) that defines a reception housing for receiving an accessory module (200) and that is open at the front;
• a shoulder (51) that is adapted to bear against the front face of said panel (100) and that is carried by a front portion (50) of the side wall (2); and
• an annular portion (80) that is situated between the front portion (50) and a rear portion (10) of the side wall (2), that is made out of the same material as said shoulder (51), and that is axially deformable;
said electrical box being **characterized in that**:
• catch means (20) for catching against the rear of said panel (100) are carried by the rear portion (10) of the side wall (2), and comprise at least one flap (21) that is adapted to pivot between a retracted position in which it does not form an obstacle to the electrical box (1) being engaged in said opening (101) and a deployed position in which it catches against the rear of said panel (100);
each flap (21) being situated in an opening (11) formed in the rear portion (10) of the side wall (2), and being connected to the edge of the opening (11), over at least a portion of its periphery, via a gasket (12) that is made out of a material that is more flexible than the material of the annular portion (80), the gasket (12) interrupting the annular portion (80) and presenting a bulge (13) that is situated in the interruption.

2. An electrical box (1) according to the preceding claim, wherein the annular portion (80) is in the form of a bellows that can be stretched axially.

3. An electrical box (1) according to either preceding claim, wherein the annular portion (80) can be stretched axially with an amplitude that is greater than 3 mm.

4. An electrical box (1) according to any preceding claim, wherein the annular portion (80), the front portion (50) of the side wall (2), at least a portion of the rear portion (10) of the side wall (2), and the catch means (20) are all made out of the same material.

5. An electrical box (1) according to any preceding claim, wherein each flap (21) comprises firstly a strip (22) that is attached to the rear portion (10) of the side wall (2) via an end edge, and secondly a catch rim (23) that is at a distance from said end edge that is substantially constant.

6. An electrical box (1) according to any preceding claim, wherein, each flap (21) is resiliently urged towards its deployed position, and each flap (21) carries a maneuvering portion that is accessible to a user from the inside of said reception housing, and that enables the flap (21) to be positioned in its retracted position.

7. An electrical box (1) according to the preceding claim, wherein the flap (21) carries a screw-fastener well (24) that is adapted to receive the threaded shank of a fastener screw (40) for fastening the accessory mechanism (200), which fastener screw (40) forms said maneuvering portion.

8. An electrical box according to any preceding claim, wherein each flap is fitted with securing means for securing a stop that is adapted to come to bear against the rear face of the hollow partition panel.

9. An electrical box (1) according to any preceding claim, wherein each flap (21) includes at least one ramp (25) that enables said flap (21) to be moved towards its retracted position by engaging the electrical box (1) in said opening (101).
